Europäisches Patentamt

European Patent Office

Office européen des brevets

(19)

(11) Veröffentlichungsnummer: **0 016 876**
**A1**

(12) # EUROPÄISCHE PATENTANMELDUNG

(21) Anmeldenummer: **79200488.9**

(22) Anmeldetag: **03.09.79**

(51) Int. Cl.³: **F 16 D 55/02, B 60 T 1/06**

(30) Priorität: **28.02.79 EP 79100588**

(43) Veröffentlichungstag der Anmeldung: **15.10.80**
**Patentblatt 80/21**

(84) Benannte Vertragsstaaten: **DE FR GB IT**

(71) Anmelder: **Klaue, Hermann, Dr., 33, Av. du Casino**
**Postfach 151, CH-1820 Montreux (CH)**

(72) Erfinder: **Klaue, Hermann, Dr., 33, Av. du Casino**
**Postfach 151, CH-1820 Montreux (CH)**

(54) **Vollbelagscheibenbremse, insbesondere für Kraftfahrzeuge.**

(57)   Vollbelagscheibenbremse, insbesondere für Kraftfahrzeuge, bei der zur Wärmeaufnahme und -abfuhr ausschließlich
das außen verrippte Rad (1) verwendet und die Bremsreibung
durch eine einzige Bremsscheibe (2) erzeugt wird. Der Belag
der Bremsscheibe wird über eine hydraulische Stufenringbetätigung (9) zugespannt, wobei die Radlagerung (19, 20) den
Reaktionsdruck aufnimmt.

ACTORUM AG

0016876

Durch Versuche wurde festgestellt, dass die in üblicher Dickenabmessung ausgeführten Bremsbeläge einer Vollbelagscheibenbremse
die Lebensdauer des Kraftfahrzeuges ohne Auswechseln aushalten,
wenn die Bremsbelagfläche bei Aussenbelüftung der umlaufenden
Bremsenteile mindestens 0,3 cm$^2$ je kp statischer Radbelastung
aufweist. Von dieser Tatsache ausgehend, liegt der Erfindung
die Aufgabe zugrunde, die Bremsenteile einer Vollbelagscheibenbremse derartig mit dem Fahrzeugrad zu vereinigen, dass ohne
Beachtung einer leichten Auswechselbarkeit des Bremsbelages
der Aufbau von Rad und Bremse vereinfacht wird und die unabgefederten, umlaufenden Massen erheblich kleiner werden. Dadurch wird die Strassenlage des Fahrzeugs und bei Verwendung
einer Blockierverhinderung deren Wirkung verbessert.

Es ist eine Vollbelagscheibenbremse (DPB 1 144 133) bekannt,
bei welcher der Radkörper als umlaufendes Bremsenteil ausgebildet ist. Diese für Nutzfahrzeuge vorgesehene Lösung weist
zwei mit Bremsbelag ausgerüstete Bremsscheiben auf, wobei nur
die beim Reibungsschluss der einen Bremsscheibe entstehende
Wärme über den Radkörper abgeführt wird. Die beim Bremsen der
zweiten Bremsscheibe entstehende Wärme wird in den im Inneren
des Rades, lösbar mit letzterem verbundenen Bremsdeckel geleitet und von diesem an die Luft abgeführt. Infolge seiner
kleineren Masse und Aussenoberfläche wird der Bremsdeckel erheblich heisser als der Radkörper, zumal die Abkühlung im Radinneren schlechter als an der Radaussenseite ist.

Dieser Nachteil wird durch den Gegenstand der Erfindung beseitigt,
wodurch der Vorteil der Ausnutzung des Radkörpers zur Wärmeüberleitung an den Fahrtwind voll zur Geltung gelangen kann.

Erfindungsgemäss ist zur ausschliesslichen Abfuhr der bei der
Bremsung entstehenden Wärme über die verrippte Aussenfläche des als umlaufendes Bremsenteil ausgebildeten Rades eine mit Bremsbelag ausgerüstete, in Umfangsrichtung fest, axial frei beweglich aufgehängte Bremsscheibe vorgesehen, welche zum Bremsen
über eine konzentrisch zur Radmittenachse auf dem die Radlagerung tragenden Achsteil angebrachte, hydraulische Stufenringbetätigung gegen die glatte Innenfläche des Rades gedrückt wird,
wobei der axiale Reaktionsdruck durch die Radlagerung aufgenommen wird.

Die entsprechende Ausbildung des Radlagers macht bei dem heutigen Stand der Lagertechnik keine Schwierigkeiten, zumal erfahrungsgemäss Vollbremsungen, bei denen die grösste Axialkraft auftritt, nur bei einem kleinen Bruchteil der von einem
Kraftwagen zurückzulegenden Gesamtfahrstrecke durchzuführen
sind.

In weiterer Ausbildung der Erfindung wird der die Radlagerung
aufnehmende Achsschenkel oder zylindrische Fortsatz des Schwenklagers an seinem Aussenumfang gleichstückig oder an einem angeflanschten Ringteil mit Stufenzylinderflächen und darin angebrachten Nuten zur Aufnahme der, gleichzeitig die Nachstellung
der Bremse vornehmenden Dichtringe ausgerüstet, über welche der
die Bremsenzuspannung bewerkstelligende, auf seiner Innenumfang
mit glatten Stufenzylinderflächen versehene, gegen Schmutzeindringung in die zylindrischen Dichtflächen durch Faltenbälge gesicherte Stufendruckring mit Bremsschlauchanschluss geschoben
ist.

Durch diese Bremsenlösung gelingt es, ein angetriebenes Kraftfahrzeugrad durch Anordnung von zwei zusätzlichen Teilen, nämlich durch die mit Bremsbelag beklebte Bremsscheibe sowie den
Stufendruckring mit einer die Lebensdauer des Fahrzeugs überdauernden, wartungsfreien, dazu praktisch fadingsfreien und wasserunempfindlichen Scheibenbremse auszurüsten.

Um bei der mit dem Rad integrierten Scheibenbremse ein leichtes Wechseln des Reifens zu ermöglichen, wird in noch weiterer Ausbildung der Erfindung das als umlaufendes Bremsenteil ausgebildete Rad an seinem Aussenumfang mit gleichmässig verteilt angeordneten, das Felgenbett der den Reifen tragenden Felge umfassenden, hakenförmigen Fortsätzen und mit, diesen Fortsätzen gegenüberliegenden Spannlaschen, welche über schraubbare Verbindungsglieder gegen die kegelförmige Aussenfläche des Felgenbettes gepresst werden, ausgerüstet ist.

In den Abbildungen sind Ausführungsbeispiele der Erfindung dargestellt.

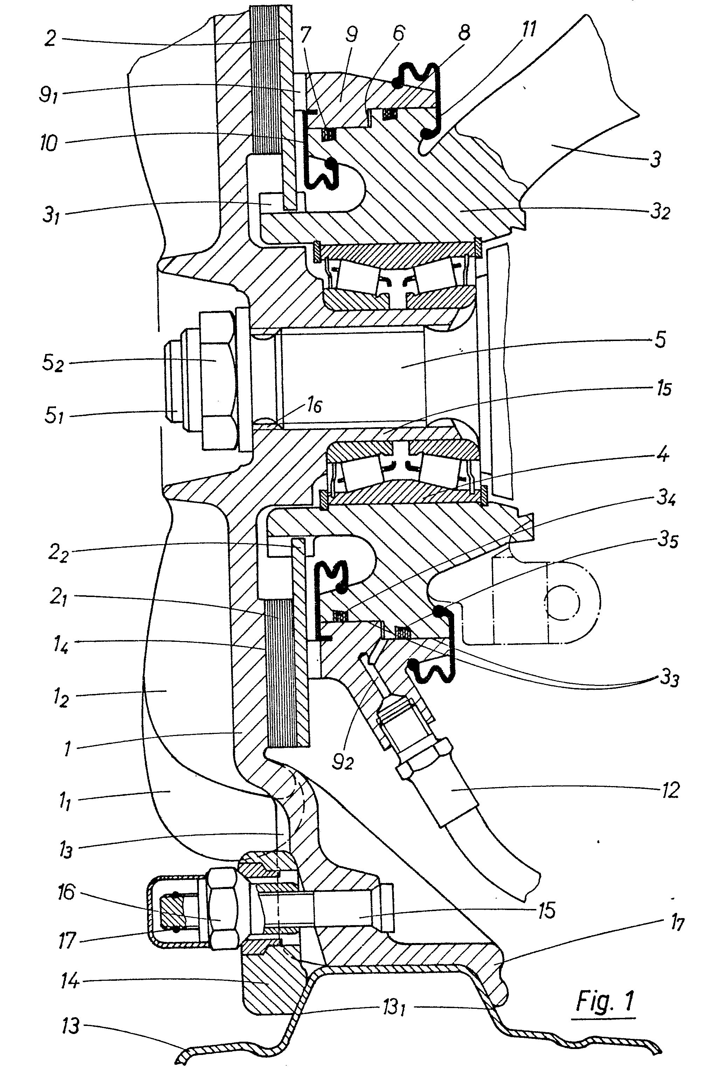

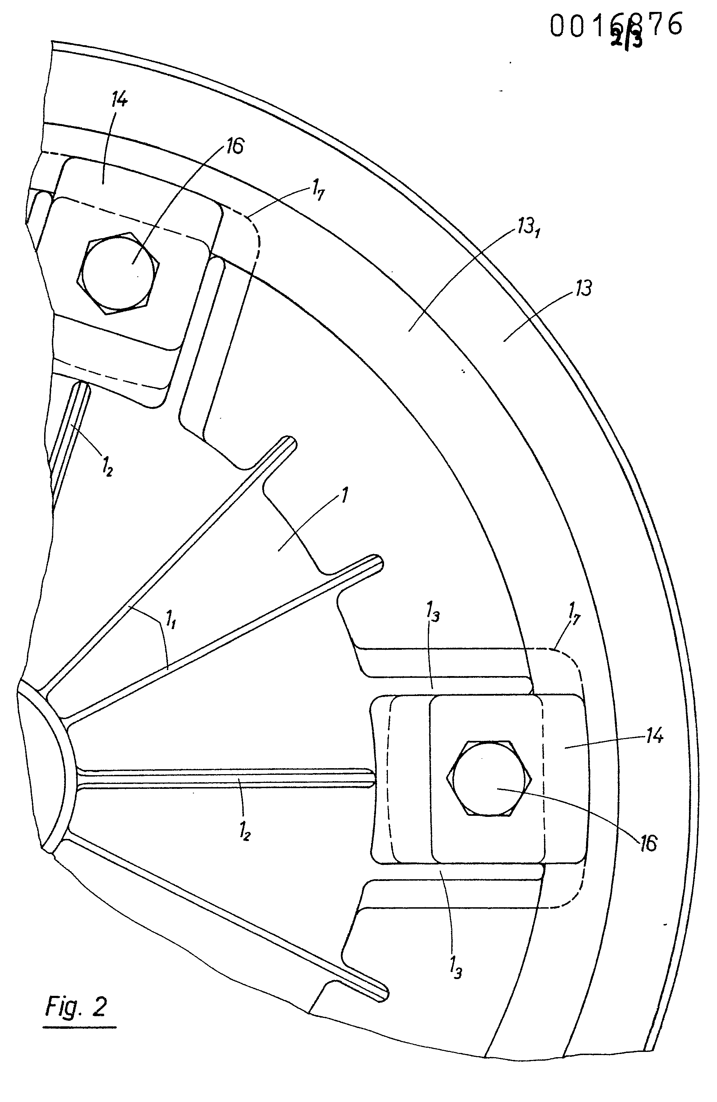

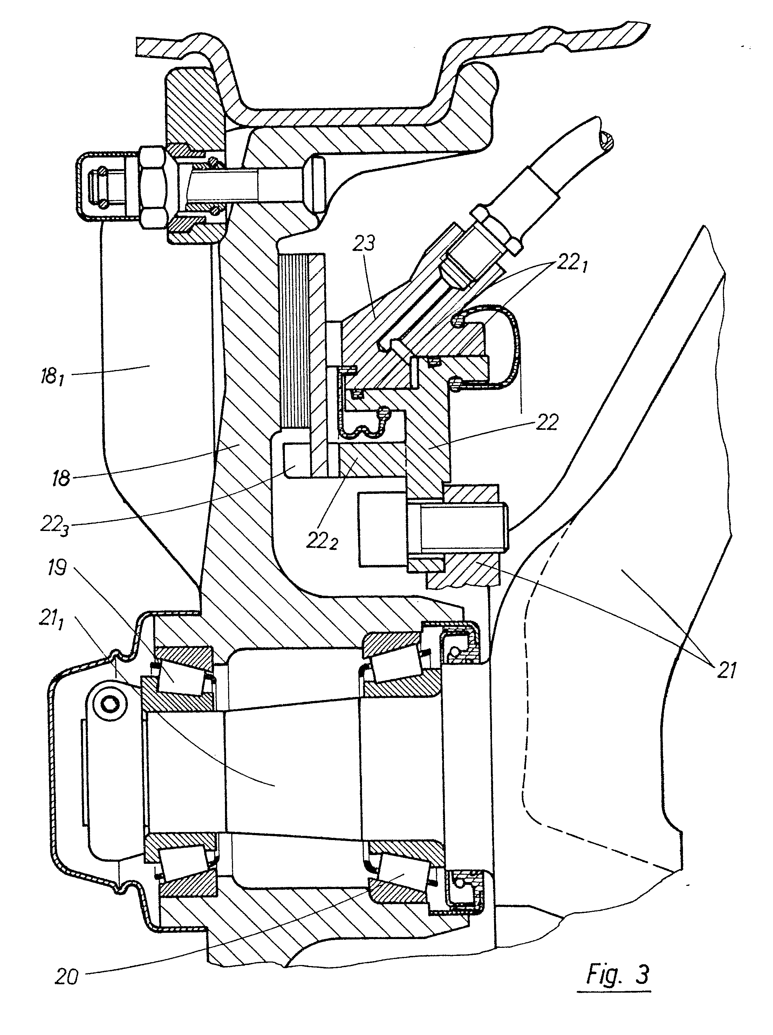

In den Zeichnungen Fig. 1 und 2 ist das angetriebene Vorderrad eines kleinen Personenkraftwagens dargestellt, in Fig. 3 ist der Teillängsschnitt durch ein nicht angetriebenes Vorderrad eines grösseren Personenkraftwagens wiedergegeben. Fig. 1 gibt den Längsschnitt durch Rad, Bremse und Felge, Fig. 2 eine Teilaussenansicht des Rades wieder.

In den Abbildungen ist mit 1 das Rad gekennzeichnet, dessen Aussenfläche durch radiale Rippen $1_1$, $1_2$ und $1_3$ vergrössert ist. Die glatte Innenfläche $1_4$ dient als Anlauffläche für den Bremsbelag 21 der Bremsscheibe 2, welche mit ihrer Innenverzahnung $2_2$ in Umfangsrichtung fest, axial frei beweglich mit der Verzahnung $3_1$ des als Radträger dienenden Schwenklagers 3 verbunden ist. Der zylindrische Fortsatz $1_5$ des Rades ist über das Doppelrollenlager 4 im Schwenklager gelagert. Ueber die Keilwellenverzahnung $1_6$ ist das Rad mit dem Wellenfortsatz 5 mit Gewindefortsatz $5_1$ und Mutter $5_2$ des Vorderradantriebes verbunden.

Das Schwenklager 3 weist einen zylindrischen Fortsatz $3_2$ auf, dessen Aussenumfang eine Stufenzylinderfläche $3_3$ mit Nuten $3_4$ und $3_5$ aufweist. In den Nuten sitzen die den Hydraulikringraum 6 abdichtenden Ringdichtungen 7 und 8, welche auch die stufenlose Nachstellung der Bremse vornehmen. Ueber die Stufen-zylinderfläche $3_3$ des Schwenklagers ist der Stufenring 9, welcher die axiale Zuspannung der Bremse bewerkstelligt, gestülpt. Der Stufenring steht über axiale Fortsätze $9_1$ mit der Brems-scheibe 2 in Verbindung. Die Schmutzsicherung der Bremsbetätigung wird durch die beiden Gummischutzbälge 10 und 11 vorgenommen. Zum Bremsen wird dem Druckraum 6, welcher durch die Stufenzylinderflächen $3_3$ des Schwenklagers gebildet wird, über den Schlauch 12 durch die Bohrung $9_2$ Drucköl zugeführt.

Im vorliegenden Beispiel ist der Radkörper 1 aus einem legierten Grauguss, Temper- oder Sphäroguss hergestellt. Er kann auch als Leichtmetallgusstück ausgebildet werden, welches an der Anlauffläche des Bremsbelages eine Verschleisschicht trägt. Zur Aufnahme der den Reifen tragenden Felge 13 weist das Rad am Umfang verteilt das Felgenbett $13_1$ der Felge 13 umfassende, haken-förmige Fortsätze $1_7$ auf, denen Spannlaschen 14 gegenübersitzen, welche durch, den Radkörper durchdringende Schrauben 15 mit Muttern 16 gespannt werden. Die Schrauben weisen Sprengringe 1' auf, welche bei der Radmontage das Herunterfallen der Muttern 16 verhindern. In der Radansicht Fig. 2 ist die Stellung der Spannlaschen 14 bei abgenommener Felge 13 wiedergegeben.

Im Beispiel Fig. 3 ist der aus Leichtmetall hergestellte Rad-körper 18 mit Aussenrippen $18_1$ auf den Kegelrollenlagern 19 und 20 des Lagerzapfens $21_1$ des Achsschenkels 21 gelagert. In diesem Fall weist der Achsschenkel einen Ringflansch 22 auf, welcher die Stufenzylinderaussenflächen $22_1$ aufweist, über die der Stufendruckring 23 geschoben ist. Der Ringflansch 22 weist

0016876
R 708

Fortsätze $22_2$ auf mit Einfräsungen $22_3$, in welche Fortsätze der Bremsscheibe 24 zur Drehmomentmitnahme eingreifen. Im übrigen ist der Radkörper analog dem Ausführungsbeispiel nach Fig. 1 und 2 ausgebildet.

Dr.Ing. Hermann Klaue

33, av. du Casino

CH-1820 Montreux

0016876

R 708/1

Vollbelagscheibenbremse,
insbesondere für Kraftfahrzeuge

Patentansprüche

1) Vollbelagscheibenbremse, insbesondere für Kraftfahrzeuge
mit einem als umlaufendes Bremsenteil ausgebildetem Rad,
dadurch gekennzeichnet, dass zur ausschliesslichen Abfuhr
der bei der Bremsung entstehenden Wärme über die verrippte
Aussenfläche des Rades (1) eine mit Bremsbelag $(2_1)$ ausgerüstete, in Umfangsrichtung fest, axial frei beweglich aufgehängte Bremsscheibe (2) vorgesehen ist, welche zum Bremsen
über eine konzentrisch zur Radmittenachse auf dem, die Radlagerung (4; 19, 20) tragenden Achsteil (3; 21) angebrachte,
hydraulische Stufenringbetätigung (9; 22) gegen die glatte
Innenfläche $(1_4)$ des Rades (1) gedrückt wird, wobei der
axiale Reaktionsdruck durch die Radlagerung (4; 19, 20)
aufgenommen wird.

2) Vollbelagscheibenbremse nach Anspruch 1), dadurch gekennzeichnet, dass der die Radlagerung (4; 19, 20) aufnehmend
Achsschenkel (21) oder zylindrische Fortsatz $(3_2)$ des Schwenklagers (3) an seinem Aussenumfang gleichstückig oder an
einem angeflanschten Teil mit Stufenzylinderflächen $(3_3; 21_2)$
und darin angebrachten Nuten $(3_4, 3_5)$ zur Aufnahme der,
gleichzeitig die Nachtellung der Bremse vornehmenden Dichtringe (7, 8), ausgerüstet ist, über welche der, die Bremsen-

...../2

zuspannung bewerkstelligende, auf seinem Innenumfang mit glatten Stufenzylinderflächen versehene, gegen Schmutzeindringung in die zylindrischen Dichtflächen durch Faltenbälge (10, 11) gesicherte Stufendruckring (9; 22) mit Bremsschlauchanschluss (12) geschoben ist.

3) Vollbelagscheibenbremse nach Anspruch 1), dadurch gekennzeichnet, dass das als umlaufendes Bremsenteil ausgebildete Rad (1; 18) an seinem Aussenumfang mit gleichmässig ange- ordneten, das Felgenbett ($13_1$) der den Reifen tragenden Felge (13) umfassenden, hakenförmigen Fortsätzen ($1_7$) und mit, diesen Fortsätzen gegenüberliegenden Spannlaschen (14), welche über schraubbare Verbindungsglieder (15, 16) gegen die kegelförmige Aussenfläche des Felgenbettes ($13_1$) ge- presst werden, ausgerüstet ist.

Fig. 1

Fig. 2

$18_1$

$18$

$22_3$

$19$

$21_1$

$20$

$23$

$22_1$

$22$

$22_2$

$21$

Fig. 3